(19) Europäisches Patentamt
European Patent Office
Office européen des brevets

(11) **EP 3 658 624 B1**

(12) **EUROPEAN PATENT SPECIFICATION**


(45) Date of publication and mention of the grant of the patent:
**26.10.2022 Bulletin 2022/43**

(21) Application number: **18745603.3**

(22) Date of filing: **25.07.2018**

(51) International Patent Classification (IPC):
***C08L 51/04*** ^(2006.01) ***C08L 83/10*** ^(2006.01)
***C08L 55/02*** ^(2006.01) ***C08L 25/12*** ^(2006.01)
***C08L 25/16*** ^(2006.01)

(52) Cooperative Patent Classification (CPC):
(C-Sets available)
**C08L 51/04; C08L 25/12; C08L 55/02; C08L 83/10;**
C08G 77/442; C08G 77/445; C08L 2205/025;
C08L 2205/035 (Cont.)

(86) International application number:
**PCT/EP2018/070142**

(87) International publication number:
**WO 2019/020680 (31.01.2019 Gazette 2019/05)**


(54) **IMPACT MODIFIED STYRENE COPOLYMER COMPOSITION COMPRISING POLYSILOXANE ADDITIVE HAVING IMPROVED ABRASION CHARACTERISTICS**

SCHLAGZÄH MODIFIZIERTE STYROLCOPOLYMERZUSAMMENSETZUNG MIT EINEM POLYSILOXANADDITIV MIT VERBESSERTEN ABRIEBEIGENSCHAFTEN

COMPOSITION DE COPOLYMÈRE DE STYRÈNE ANTICHOC COMPRENANT UN ADDITIF POLYSILOXANE PRÉSENTANT DES CARACTÉRISTIQUES D’ABRASION AMÉLIORÉES


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.07.2017 EP 17183294**

(43) Date of publication of application:
**03.06.2020 Bulletin 2020/23**



(73) Proprietor: **INEOS Styrolution Group GmbH**
**60325 Frankfurt am Main (DE)**

(72) Inventors:
- **SCHULZ, Tobias**
  **51103 Köln (DE)**
- **NIESSNER, Norbert**
  **67159 Friedelsheim (DE)**
- **CHUNG, Andrew**
  **Plainfield**
  **Illinois 60585 (US)**
- **JOHNSON, Richard**
  **Joliet**
  **Illinois 60435 (US)**

(74) Representative: **Jacobi, Markus Alexander**
**Patentanwälte**
**Isenbruck Bösl Hörschler PartG mbB**
**Eastsite One**
**Seckenheimer Landstrasse 4**
**68163 Mannheim (DE)**



(56) References cited:
**CN-B- 104 479 273**
**JP-A- S6 239 610**
**JP-A- 2013 237 728**
**US-A- 5 380 795**
**US-A1- 2008 242 779**
**US-A1- 2011 152 418**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 25/12, C08L 25/16, C08L 51/04, C08L 51/04, C08K 3/04, C08L 83/10**

## Description

The present invention relates to a thermoplastic polymer composition (P) comprising at least one styrene-based polymer composition comprising at least one styrene-based graft copolymer and at least one organopolysiloxane compound. The thermoplastic polymer composition (P) is characterized by having improved residual gloss after abrasion combined with improved melt flow characteristics. Impact strength and heat resistance of the thermoplastic polymer composition (P) are substantially not negatively affected.

Impact modified styrene copolymers such as poly(acrylonitrile-butadiene-styrene) (ABS) and poly(acrylonitrile-styrene-acrylic ester) (ASA) and their blends with other thermoplastic polymers such as polycarbonate (PC) and/or polyamide (PA) are widely used in many applications, e.g. in automotive industry, electronic industry or for household goods. The popularity of these thermoplastic polymer compositions may be attributed to their balanced properties of good impact strength and melt flow characteristics, combined with a competitive price and in some cases high UV resistance.

However, articles made of the mentioned impact modified styrene copolymer compositions on the other hand exhibit characteristics with respect to residual gloss after abrasion which are insufficient for some applications (in particular for housings of electronic articles and automotive interior parts), compared to articles made from poly(methyl methacrylate) (PMMA) or articles comprising curable coatings (e.g. UV-curable coatings).

It was therefore one object of the present invention, to provide a thermoplastic polymer composition based on styrene copolymers which is able to overcome the mentioned drawbacks with respect to residual gloss after abrasion and which is still inexpensive and/or easy to be prepared as compared to alternative solutions, such as articles made of PMMA or surface coated articles.

Different thermoplastic polymer compositions having improved scratch resistance properties are known in the art. WO 2016/79324 relates to thermoplastic silicone elastomer compositions comprising a blend of an organic thermoplastic elastomer and a silicone composition. Upon vulcanization at elevated temperatures between 100°C and 250°C, a thermoplastic elastomer is obtained which exhibits improved scratch resistance.

WO 2015/132190 relates to a scratch resistant polymer composition containing a thermoplastic organic polymer (P) and a master batch obtained from reactively mixing a thermoplastic organic polymer (A) and an organopolysiloxane (B) at a temperature at which the thermoplastic organic polymer (A) and the organopolysiloxane (B) are in liquid phases, wherein the organopolysiloxane (B) contains at least one functionality capable of reacting with the thermoplastic organic polymer (A) so that a copolymer of (A) and (B) is formed in the master batch during the reactive mixing.

WO 2010/072812 is concerned with the use of a material for the absorption of impact energy wherein the composition of the material is a mixture of at least: (a) component (A) an organic thermoplastic elastomer having a hardness below 80 shore A measured at 23°C (ISO 868); (b) component (B) which is a non-cross-linked and substantially non-reactive silicone polymer or a cross-linked silicone polymer, with the exclusion of borated silicone polymers exhibiting dilatant properties. Examples of organic thermoplastic elastomers (A) are block copolymers having two or more hard blocks of aromatic vinyl units and one or more unsaturated, partially saturated, or fully saturated aliphatic soft blocks.

JP06025507A deals with a scratch resistant rubber-modified styrene-based resin composition. The composition comprises a copolymer of styrene-based monomer and a (meth)acrylic ester monomer in which a rubbery elastomer (e.g. a styrene-butadiene copolymer) is dispersed. Scratch resistance is achieved by the addition of an organopolysiloxane.

JP62039610A relates to a rubber-modified styrene-based resin composition which is obtained by incorporating a rubber-modified styrene based resin prepared by dissolving a rubbery polymer in a styrene-based monomer and polymerizing the resultant mixture with a organopolysiloxane and a comb-shaped copolymer having a backbone chain part consisting of a polymer of a styrene-based monomer and a side chain part consisting of a polymer of an acrylate-based monomer.

JP57187345A relates to a rubber-modified styrene resin composition containing 0.002 to 0.2 parts by weight (in terms of silicon) of an organopolysiloxane and a rubbery polymer constituting a non-rigid component dispersed therein. The rubbery polymer is composed of at least 70 wt.-% of polybutadiene wherein 15 to 30 mol-% thereof has a 1,2-vinyl bonded structure, and the average particle size of non-rigid component particles is within the range of 5 to 2.5 $\mu$m.

JP57187346A describes a rubber-modified styrene resin composition containing a rubbery polymer and an organopolysiloxane. The rubber-modified styrene resin is prepared by bulk or bulk suspension polymerization method and comprises rubbery particles having diameters in the range from 0.5 to 2.5 $\mu$m. The organopolysiloxane is added in amounts of 0.002 to 0.2 wt.-% in terms of silicon.

JP6118433A relates to a composition for foaming obtained by compounding a rubbery polymer latex (e.g. a styrene-butadiene copolymer rubber latex) with an aqueous solution of an organic or inorganic ammonium salt and an organopolysiloxane by emulsifying with an emulsifier.

US 2008/0242779 A1 discloses thermoplastic compositions having an improved gloss retention after abrasion comprising (i) a rubber modified thermoplastic resin (e.g. ASA graft copolymer, (ii) a rigid thermoplastic polymer (e.g.

SAN/AMSAN copolymer), and (iii) a silicone oil (0.3 to 3 parts per hundred parts resin) essentially consists of polydimethylsiloxane (all examples).

US 5,380,795 A discloses a polymer mixture comprising polycarbonates (A) as main component (50 to 90 wt.-%, preferably 60 to 80 wt.-%), and as further components 2 to 40 wt.-% styrene-containing copolymer and/or styrene-containing graft rubber copolymer (B) and 2 to 40 wt.-% polysiloxane-polycarbonate block copolymer (C).

In view of these prior art documents it was a further object of the present invention to provide a thermoplastic polymer composition having the above-discussed properties (i.e. high residual gloss after abrasion at competitive prices), and which is obtainable by an easy preparation method. These objects are solved by the present invention.

The present invention relates to a thermoplastic polymer composition (P) comprising (or consisting of):

(A) up to 99.75 wt.-% of at least one styrene-based polymer composition (A) comprising at least one styrene-based graft copolymer (A-1);
(B) 0.25 to 5 wt.-% of at least one organopolysiloxane compound;
(C) 0 to 10 wt.-% of at least one colorant, dye or pigment; and
(D) 0 to 3 wt.-% of at least one further additive; wherein the constituents (A) to (D) sum up to 100 wt.-% of the thermoplastic polymer composition (P); and wherein

- the styrene-based polymer composition (A) comprises 20 to 60 wt.-%, preferably 30 to 40 wt.-%, of at least one styrene-based graft copolymer (A-1) and 40 to 80 wt.-%, preferably 60 to 70 wt.-%, of at least one thermoplastic polymer (A-2) selected from poly(styrene-acrylonitrile) (SAN), poly(a-methyl styrene-acrylonitrile) (AMSAN) and mixtures thereof;
- the at least one organopolysiloxane compound (B) has a weight average molecular weight Mw of 20,000 g/mol to 100,000 g/mol, determined by gel permeation chromatography (GPC) relative to polystyrene as standard and THF as solvent;
- wherein the at least one organopolysiloxane compound (B) is a block copolymer comprising blocks of polysiloxane moieties comprising repeating units having the following formula (Ia):

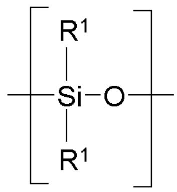

(Ia)

wherein each $R^1$ is independently selected from a linear or branched, saturated or unsaturated hydrocarbon group having 1 to 10, preferably 1 to 6, carbon atoms, and blocks of polyester and/or polyolefin moieties; and

- the at least one graft copolymer (A-1) is selected from a poly(acrylonitrilebutadiene-styrene) (ABS) having an average particle size $D_{50}$ of the rubber particles in the ABS copolymer from 50 to 750 nm, a poly(acrylonitrilestyrene-acrylic ester) (ASA) having an average particle size $D_{50}$ of the rubber particles in the ASA copolymer from 50 to 1000 nm, and mixtures thereof, wherein the average particle size is determined using an ultracentrifuge.

Often, the compositions comprise component(s) (C) and or (D).

In a preferred embodiment of the invention, the thermoplastic polymer composition (P) comprises (or consists of):

(A) up to 99.75 wt.-% of at least one styrene-based polymer composition (A) comprising at least one styrene-based graft copolymer (A-1);
(B) 0.25 to 4 wt.-% of at least one organopolysiloxane compound;
(C) 0 to 10 wt.-% of at least one colorant, dye or pigment; and
(D) 0 to 3 wt.-% of at least one further additive;

wherein the constituents (A) to (D) sum up to 100 wt.-% of the thermoplastic polymer composition (P).

In a further preferred embodiment, the thermoplastic polymer composition (P) comprises (or consists of):

(A) up to 99.5 wt.-% of an styrene-based polymer composition (A) comprising at least one styrene-based graft copolymer (A-1);
(B) 0,5 to 3 wt.-% of at least one organopolysiloxane compound;

(C) 0 to 10 wt.-% of at least one colorant, dye or pigment; and
(D) 0 to 3 wt.-% of at least one further additive;

wherein the constituents (A) to (D) sum up to 100 wt.-% of the thermoplastic polymer composition (P).

In a further preferred embodiment, the thermoplastic polymer composition (P) comprises (or consists of):

(A) up to 98.5 wt.-% of an styrene-based polymer composition (A) comprising at least one styrene-based graft copolymer (A-1);
(B) 0,5 to 3 wt.-% of at least one organopolysiloxane compound;
(C) 0.5 to 5 wt.-% of at least one colorant, dye or pigment; and
(D) 0.5 to 3 wt.-% of at least one further additive;

wherein the constituents (A) to (D) sum up to 100 wt.-% of the thermoplastic polymer composition (P).

In the following, the components/constituents (A) to (D) are described in further detail.

Styrene-based polymer composition (Constituent A)

The thermoplastic polymer composition (P) comprises at least one styrene-based polymer composition (A). The styrene-based polymer composition (A) comprises at least one graft copolymer (A-1). Styrene-based graft copolymers (A-1) are rubber-modified copolymers of acrylonitrile and styrene which are graft-polymerized on rubber particles derived from polymerizing at least one conjugated diene monomer or at least one acrylate monomer.

According to the invention, the at least one graft copolymer (A-1) used is preferably composed of:

A-1.1: from 20 to 90 wt.-%, preferably from 40 to 90 wt.-%, particularly preferably from 45 to 85 wt.-%, very particularly preferably from 50 to 80 wt.-%, based on the total weight of the graft copolymer (A-1), of a graft base of one or more monomers consisting of:

A-1.11: 70 to 100 wt.-%, preferably 75 to 100 wt.-%, particularly preferably 80 to 100 wt.-%, based on the total weight of the graft base (A-1.1), of at least one conjugated diene, in particular butadiene, and / or at least one C1 to C8 alkyl(meth)acrylate, in particular n-butyl acrylate and / or 2-ethylhexyl acrylate,
A-1.12: 0 to 30 wt.-%, preferably 0 to 25 wt.-%, particularly preferably 0 to 20 wt.-%, based on the total weight of the graft base (A-1.1), of at least one further comonomer selected from: styrene, $\alpha$-methyl styrene, acrylonitrile, methacrylonitrile, methyl methacrylate, maleic acid anhydride and N-phenylmaleimide, preferably styrene and $\alpha$-methyl styrene, particularly preferably styrene;
A-1.13: from 0 to 10 wt.-%, preferably from 0.01 to 5, particularly preferably from 0.02 to 2 wt.-%, based on the total weight of the graft base (A-1.1), of one or more polyfunctional crosslinking monomers, selected from chosen from allyl(meth)acrylate, divinylbenzene, diallylmaleate, diallylfumarate, diallylphthalate, triallylcyanurat, triallylisocyanurat and dicyclopentadienylacrylate (DCPA), which, when component A11 is acrylate, is present in amounts of at least 0.1 wt.-%;

A-1.2: from 10 to 80 wt.-%, preferably from 10 to 60 wt.-%, more preferably from 15 to 55 wt.-%, very particularly preferably from 20 to 50 wt.-%, based on the total weight of the graft copolymer (A-1), of at least one graft layer of one or more monomers consisting of:

A-1.21: from 65 to 95 wt.-%, preferably from 70 to 90 wt.-%, particularly preferably from 75 to 85 wt.-%, based on the total weight of the graft layer (A-1.2), of at least one vinylaromatic monomer, preferably styrene and / or $\alpha$-methyl styrene, in particular styrene;
A-1.22: 5 to 35 wt.-%, preferably 10 to 30 wt.-%, particularly preferably 15 to 25 wt.-%, based on the total weight of the graft layer (A-1.2), of acrylonitrile and / or methacrylonitrile, preferably acrylonitrile; and

A-1.3: 0 to 30 wt.-%, preferably 0 to 20 wt.-%, particularly preferably 0 to 15 wt.-%, based on the total weight of the graft copolymer (A-1), of at least one further constituent selected from:

at least one monoethylenically unsaturated monomer selected from: methyl methacrylate, maleic acid anhydride and N-phenylmaleimide, preferably methyl methacrylate and/or
at least one molecular weight regulator, in particular a thiol-based molecular weight regulator such as tert-dodecylmercaptan.

Preferred polyfunctional crosslinking monomers are allyl(meth)acrylate and/or dicyclopentadienylacrylate (DCPA), and more preferred DCPA.

Preferably, the graft copolymer (A-1) is prepared in an emulsions polymerization process or a suspension polymerisation process. The graft base A-1.1, comprising monomers A-1.11, A-1.12 and optionally A-1.13, as well as its preparation is known and described in the literature, e.g. DE-A 28 26 925, DE-A 31 49 358 and DE-A 34 14 118.

The graft polymerization used to synthesize graft shell A-1.2 is conveniently done in the same vessel like the emulsion polymerization done for the synthesis of the graft base A-1.1. During the reaction additives, like emulsifiers, pH buffers and initiators can be added. The monomers of the graft shell, especially monomers A-1.21 and A-1.22 can be added at once to the reaction mixture or step-wise in several steps, preferably in a continuous way, added during polymerization. When monomers A-1.21 and/or A-1.22 are added in several steps, typically a multi layered graft shell A-1.2 is obtained.

Suitable emulsifiers, buffers and initiators are described in WO 2015/150223 and WO 2015/078751.

The styrene-based graft copolymer (A-1) is selected from poly(acrylonitrile-butadienestyrene) (ABS) and poly(acrylonitrile-styrene-acrylic ester) (ASA) and mixtures thereof.

In a preferred embodiment, the styrene-based graft copolymer (A-1) according to the invention is particular preferably an ABS copolymer composed of:

A-1.1: from 40 to 90 wt.-%, based on the total weight of the styrene-based graft copolymer (A-1), of a graft base consisting of:

A-1.11: from 70 to 100 wt.-%, preferably from 90 to 99.9 wt.-%, based on the total weight of the graft base (A-1.1), of butadiene,
A-1.12: 0 to 30 wt.-%, preferably 1 to 10 wt.-%, based on the total weight of the graft base (A-1.1), of styrene and

A-1.2: from 10 to 60 wt.-%, based on the total weight of the styrene-based graft copolymer (A-1), of a graft comprising:

A-1.21: from 65 to 95 wt.-%, based on the total weight of the graft layer (A-1.2), of styrene;
A-1.22: 5 to 35 wt.-%, based on the total weight of the graft layer (A-1.2), of acrylonitrile and

A-1.3: 0 to 30 wt.-%, based on the total weight of the styrene-based graft copolymer (A-1), MMA and/or tert-dodecylmercaptan.

The average particle size $D_{50}$ (determined using an ultracentrifuge) of the graft base (A-1.1) of the ABS copolymer is generally from 50 to 750 nm, preferably from 60 to 600 nm, and particularly preferably from 70 to 450 nm. Improved product characteristics were observed with respect to melt volume-flow rate and Charpy notched impact strength for these embodiments.

In an alternative preferred embodiment, the graft copolymer (A-1) according to the invention is particular preferably an ASA copolymer composed of:

A-1.1: from 40 to 90 wt.-%, based on the total weight of the styrene-based graft copolymer (A-1), of a graft base consisting of:

A-1.11: from 70 to 99.9 wt.-%, preferably from 90 to 99.5 wt.-%, based on the total weight of the graft base (A-1.1), of at least one C1 to C8 alkyl(meth)acrylate, preferably n-butylacrylate and/or 2-ethylhexylacrylate, in particular n-butylacrylate,
A-1.12: 0 to 30 wt.-%, preferably 1 to 10 wt.-%, based on the total weight of the graft base (A-1.1), of styrene,
A-1.13: 0.5 to 5 wt.-%, preferably 0.1 to 5 wt.-%, in particular 0.5 to 3 wt.-%, most preferred 1 to 2.5 wt.-%, based on the total weight of the graft base (A-1.1), of at least one polyfunctional cross-linking monomer, selected from chosen from allyl(meth)acrylate, divinylbenzene, diallylmaleate, diallylfumarate, diallylphthalate, triallylcyanurat, triallylisocyanurat and dicyclopentadienylacrylate (DCPA), preferably selected from allyl(meth)acrylate and DCPA, in particular DCPA, and

A-1.2: from 10 to 60 wt.-%, based on the total weight of the styrene-based graft copolymer (A-1), of a graft comprising:

A-1.21: from 65 to 95 wt.-%, based on the total weight of the graft layer (A-1.2), of styrene;
A-1.22: 5 to 35 wt.-%, based on the total weight of the graft layer (A-1.2), of acrylonitrile and

A-1.3: 0 to 30 wt.-%, based on the total weight of the styrene-based graft copolymer (A-1), MMA.

The average particle size $D_{50}$ determined using an ultracentrifuge of the graft base (A-1.1) of the ASA copolymer is generally from 50 to 1000 nm, preferably from 60 to 850 nm, and particularly preferably from 70 to 700 nm. Typically the mean particle diameter can be measured by ultracentrifugation (e.g. described in W. Scholtan, H. Lange, Kolloid-Z. u. Z. Polymere 250, S. 782 bis 796, 1972) or using Hydrodynamic Chromatography HDC (e.g. described in W. Wohlleben, H. Schuch, "Measurement of Particle Size Distribution of Polymer Latexes", 2010, Editors: L. Gugliotta, J. Vega, p. 130 - 153).

The mean particle diameter $D_{50}$ represents the value of the particle size distribution curve where 50 vol.-% of the particles (e.g. polyacrylate latex) have a smaller diameter and the other 50 vol.-% have a larger diameter, compared to the $D_{50}$ value. In similar way for example the $D_{90}$ values gives the particle diameter, where 90 vol.-% of all particles have a smaller diameter. The mean particle size (mass mean, dw) can be also determined by turbidity measurement as described in Lange, Kolloid-Zeitschrift und Zeitschrift für Polymere, Band 223, Heft 1.

In a preferred embodiment graft copolymer A-1 (obtained as latex) has an average particle diameter ($D_{50}$, median) of 50 to 1000 nm, preferred 90 to 700 nm. The particle size of latex particles can be governed during synthesis by suitable means known in the literature, e.g. DE-A 28 26 925.

In a further preferred embodiment of the invention the inventive process covers the synthesis of one or at least two different graft copolymers A-1-I and A-1-II, where graft copolymers differ in their mean particle size $D_{50}$. Graft copolymer A-1 especially comprises at least one of the graft copolymers A-1-I and A-1-II, wherein:

(i) Graft copolymer A-1-I has a mean particle diameter $\underline{D}_{50}$ from 50 to 180 nm, preferred 80 to 150 nm, most preferred 90 to 100 nm (small size ASA rubber), and

(ii) Graft copolymer A-1-II has a mean particle diameter $D_{50}$ from 200 to 800 nm, preferred 300 to 700 nm, most preferred 400 to 600 nm (large size ASA rubber).

Preferably, graft copolymer A-1-II (large size ASA rubber) has a narrow particle size distribution, where Q= $(D_{90}-D_{10})/D_{50}$ is less than 0.3, preferably less than 0.2.

The styrene-based polymer composition (A) comprises at least one additional thermoplastic polymer (A-2) selected from poly(styrene-acrylonitrile) (SAN), poly(a-methyl styrene-acrylonitrile) (AMSAN) and mixtures thereof.

The styrene-based polymer composition (A) comprises 20 to 60 wt.-%, preferably 30 to 40 wt.-%, based on the total weight of the styrene-based polymer composition (A), of at least one styrene-based graft copolymer (A-1) (graft copolymer) and 40 to 80 wt.-%, preferably 60 to 70 wt.-%, based on the total weight of the styrene-based polymer composition (A), of at least one thermoplastic polymer (A-2) selected from poly(styrene-acrylonitrile) (SAN), poly(a-methyl styrene-acrylonitrile) (AMSAN) and mixtures thereof.

In a preferred embodiment, the styrene-based polymer composition (A) comprises 20 to 60 wt.-%, preferably 30 to 40 wt.-%, based on the total weight of the styrene-based polymer composition (A), of at least one styrene-based graft copolymer (A-1) and 40 to 80 wt.-%, preferably 60 to 70 wt.-%, based on the total weight of the styrene-based polymer composition (A), of a thermoplastic polymer (A-2) comprising 40 to 60 wt.-% of SAN and 60 to 40 wt.-% AMSAN, preferably 45 to 55 wt.-% of SAN and 55 to 45 wt.-% AMSAN, based on the total weight of the thermoplastic polymer (A-2).

SAN and AMSAN Components

Poly(styrene-acrylonitrile) (SAN) and/or poly(a-methyl styrene/acrylonitrile) (AMSAN) are used as thermoplastic polymer (A-2). In general, any SAN and/or AMSAN copolymer known in in the art may be used within the subject-matter of the present invention. In a preferred embodiment, the SAN and AMSAN copolymers of the present invention contain:

- from 50 to 99 wt.-%, based on the total weight of the SAN and/or AMSAN copolymer, of at least one member selected from the group consisting of styrene and $\alpha$-methyl styrene, and
- from 1 to 50 wt.-%, based on the total weight of the SAN and/or AMSAN copolymer, of acrylonitrile.

The weight average molecular weight (as determined by gel permeation chromatography relative to polystyrene as standard) of the SAN or AMSAN copolymer is often in the range of 15,000 to 200,000 g/mol, preferably in the range of 30,000 to 150.000 g/mol.

Particularly preferred ratios by weight of the components making up the SAN or AMSAN copolymer are 60 to 95 wt.-%, based on the total weight of the SAN and/or AMSAN copolymer, of styrene and/or $\alpha$-methyl styrene and 40 to 5 wt.-%, based on the total weight of the SAN and/or AMSAN copolymer, of acrylonitrile.

Particularly preferred are SAN or AMSAN containing proportions of incorporated acrylonitrile monomer units of < 36wt.-%, based on the total weight of the SAN and/or AMSAN copolymer.

More preferred are copolymers of styrene with acrylonitrile of the SAN or AMSAN type incorporating comparatively little acrylonitrile (not more than 35wt.-%, based on the total weight of the SAN and/or AMSAN copolymer).

Most preferred are copolymers as component made from, based on

- from 65 to 81 wt.-%, based on the total weight of the SAN and/or AMSAN copolymer, of at least one member selected from the group consisting of styrene and $\alpha$-methyl styrene, and
- from 19 to 35 wt.-%, based on the total weight of the SAN and/or AMSAN copolymer, of acrylonitrile.

Among the afore-mentioned, most preferred SAN or AMSAN copolymers, those, having a viscosity number VN (determined according to DIN 53726 at 25°C, 0.5% by weight in dimethylformamide) of from 50 to 120 ml/g are in particular preferred.

The copolymers of SAN or AMSAN component are known and the methods for their preparation, for instance, by radical polymerization, more particularly by emulsion, suspension, solution and bulk polymerization are also well documented in the literature.

Details concerning the production of these resins are described for example in US 4,009,226 and US 4,181,788. Vinyl resins produced by bulk polymerization or solution polymerization have proved to be particularly suitable. The copolymers may be added alone or as an arbitrary mixture.

Organopolysiloxane compound (Constituent B)

The thermoplastic polymer composition (P) further comprises at least one organopolysiloxane compound (B). It was surprisingly found that the addition of small amounts of at least one organopolysiloxane compound (B) are sufficient to have a positive effect on the residual gloss after scratch or abrasion of a surface prepared from thermoplastic polymer composition (P) according to the invention. As previously described, the at least one organopolysiloxane compound (B) is present in amounts of 0.25 to 5 wt.-%, based on the entire thermoplastic polymer composition (P). It was found that even very small amounts, in particular, amounts in the range of 0.25 to 5 wt.-%, preferably 0.5 to 4 wt.-%, in particular 0.75 to 3 wt.-% of the at least one organopolysiloxane compound are already sufficient to achieve the advantageous technical effects.

The organopolysiloxane compound (B) has a weight average molecular weight Mw of 20,000 g/mol to 100,000 g/mol, preferably 30,000 g/mol to 80,000 g/mol, determined by gel permeation chromatography (GPC) relative to polystyrene as standard and THF as solvent. The viscosity at 25 °C of the organopolysiloxane compound (B) according to the invention is from 500 to 5000 mPas, determined for example by a falling ball viscometer or a capillary viscometer.

The at least one organopolysiloxane compound (B) is a polysiloxane comprising repeating units having the following formula (Ia):

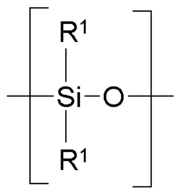

(Ia)

wherein each $R^1$ is independently selected from a linear or branched, saturated or unsaturated hydrocarbon group having 1 to 10, preferably 1 to 6, carbon atoms.

In a preferred embodiment, each $R^1$ is identical and selected from a linear or branched, saturated hydrocarbon group having 1 to 6 carbon atoms.

Preferred examples of the polysiloxane moieties are derived from poly(dimethylsiloxane), poly(diethylsiloxane), poly(dipropylsiloxane), poly(dibutylsiloxane), and mixtures thereof.

The organopolysiloxane compound (B) further comprises at least one further repeating unit, in particular repeating units derived from polymerizable esters and/or olefins. The organopolysiloxane compound (B) is a block copolymer comprising at least one block of polysiloxane moieties comprising repeating units of formula (Ia) and at least one block of polyester moieties and/or at least one block of polyolefin moieties. Furthermore, functional groups may be present, preferably as terminal groups. Particular preferred functional groups are selected from vinyl groups and/or alkoxy groups, in particular alkoxy groups having linear or branched alkyl groups comprising 1 to 6 carbon atoms.

In a particular preferred embodiment, the organopolysiloxane compound (B) comprises more than 70 wt.-%, preferably more than 80 wt.-% and in particular more than 90 wt.-% of repeating units having the following formula (la), in particular with each $R^1$ representing $-CH_3$, or $-CH_2CH_3$.

In another preferred embodiment, the polyester moiety of the organopolysiloxane compound (B) is - if present - derived from repeating units having the following formula (II):

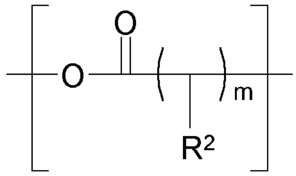

(II)

wherein $R^2$ is independently selected from a hydrogen atom and a linear or branched, saturated or unsaturated hydrocarbon group having 1 to 10, preferably 1 to 6, carbon atoms, and m is an integer from 1 to 10, preferably 1 to 5. In a further preferred embodiment, $R^2$ represents a hydrogen atom.

In another preferred embodiment, the polyolefin moiety of the organopolysiloxane compound (B) is - if present - derived from repeating units selected from ethylene, propylene and mixtures thereof.

In one embodiment of the invention, the at least one organopolysiloxane compound is a polyester-polysiloxane-block copolymer. The polysiloxane block is derived from repeating units having the above formula (Ia).

In another preferred embodiment of the invention, the at least one organopolysiloxane compound is a polyolefin-polysiloxane-block copolymer. The polysiloxane block is derived from repeating units having the above formula (Ia).

In a further preferred embodiment, the at least one organopolysiloxane compound (B) is a [polyolefin-b-polysiloxane-b-polyester] triblock copolymer. The polysiloxane block is derived from repeating units having the above formula (Ia).

In an alternative preferred embodiment, the at least one organopolysiloxane compound (B) comprises polysiloxane moieties derived from repeating units having the above-defined formula (Ia) and from repeating units having the following formula (Ib):

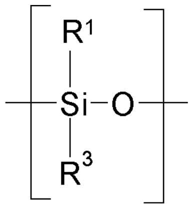

(Ib)

wherein $R^1$ is defined as above and $R^3$ represents a polyolefin moiety, preferably derived from repeating units selected from from ethylene, propylene and mixtures thereof.

The repeating units of formula (Ib) are statistically distributed within the polysiloxane moieties and amount to 1 to 50 wt.-%, preferably 2 to 30 wt.-%, in particular 3 to 15 wt.-%, based on the entire weight of the polysiloxane moieties. Thus, the alternative embodiment relates to a block copolymer having a brush structure.

Dyes, Pigments, Colorants (Constituent C)

The thermoplastic polymer composition (P) may further comprise 0 to 10 wt.-%, often 0.1 to 5 wt.-% of dyes, pigments, or colorants which may be added in form of master batches comprising the dyes, pigments, or colorants in a polymer matrix. In a preferred embodiment, the dyes, pigments, or colorants are added in form of a master batch comprising 20 to 70 wt.-%, preferably 40 to 60 wt.-%, based on the total amount of the master batch, of dyes, pigments, colorants or mixtures thereof and 30 to 80 wt.-%, preferably 40 to 60 wt.-%, based on the total amount of the master batch, a copolymer of an vinylaromatic olefin and acrylonitrile as matrix polymer. Preferably, the matrix polymer is selected from poly(styrene-acrylonitrile) (SAN), poly(a-methyl styrene/acrylonitrile) (AMSAN), and/or poly(styrene-methyl methacrylate) (SMMA).

Examples of suitable pigments include titanium dioxide, phthalocyanines, ultramarine blue, iron oxides or carbon black, and also the entire class of organic pigments. Examples of suitable colorants include all dyes that may be used for the transparent, semitransparent, or non-transparent coloring of polymers, in particular those suitable for coloring styrene copolymers.

Additives (Constituent D)

Various additives may be added to the molding compounds in amounts of from 0 to 3 wt.-%, often 0.1 to 3 wt.-%, as assistants and processing additives. Suitable additives (D) include all substances customarily employed for processing or finishing the polymers. In general, the presence of organopolysiloxane compounds (B) does not exclude the presence of additives (D) comprising organopolysiloxane compounds which are different from the organopolysiloxane

compounds (B).

Additives (D) may be added in form of master batches comprising additives (D) in a polymer matrix. In a preferred embodiment, the additives (D) are added in form of a master batch comprising 20 to 70 wt.-%, preferably 40 to 60 wt.-%, based on the total amount of the master batch, of additives (D) or mixtures thereof and 30 to 80 wt.-%, preferably 40 to 60 wt.-%, based on the total amount of the master batch, a copolymer of an vinylaromatic olefin and acrylonitrile as matrix polymer. Preferably, the matrix polymer is selected from poly(styrene-acrylonitrile) (SAN), poly(a-methyl styrene/acrylonitrile) (AMSAN), and/or poly(styrene-methyl methacrylate) (SMMA).

Examples of additives (D) include, for example, antistatic agents, antioxidants, flame retardants, stabilizers for improving thermal stability, stabilizers for increasing photostability, stabilizers for enhancing hydrolysis resistance and chemical resistance, anti-thermal decomposition agents and in particular lubricants that are useful for production of molded bodies/articles. These further added substances may be admixed at any stage of the manufacturing operation, but preferably at an early stage in order to profit early on from the stabilizing effects (or other specific effects) of the added substance. For further customary assistants and added substances, see, for example, "Plastics Additives Handbook", Ed. Hans Zweifel, 6th edition, Hanser Publ., Munich, 2009.

Examples of suitable antistatic agents include amine derivatives such as N,N-bis(hydroxyalkyl)alkylamines or -alkyleneamines, polyethylene glycol esters, copolymers of ethylene oxide glycol and propylene oxide glycol (in particular two-block or three-block copolymers of ethylene oxide blocks and propylene oxide blocks), and glycerol mono- and distearates, and mixtures thereof.

Examples of suitable antioxidants include sterically hindered monocyclic or polycyclic phenolic antioxidants which may comprise various substitutions and may also be bridged by substituents. These include not only monomeric but also oligomeric compounds, which may be constructed of a plurality of phenolic units. Hydroquinones and hydroquinone analogs are also suitable, as are substituted compounds, and also antioxidants based on tocopherols and derivatives thereof. It is also possible to use mixtures of different antioxidants. It is possible in principle to use any compounds which are customary in the trade or suitable for styrene copolymers, for example antioxidants from the Irganox® range. In addition to the phenolic antioxidants cited above by way of example, it is also possible to use so-called co-stabilizers, in particular phosphorus- or sulfur-containing co-stabilizers. These phosphorus- or sulfur-containing co-stabilizers are known to those skilled in the art.

Examples of suitable flame retardants that may be used include the halogen-containing or phosphorus-containing compounds known to the person skilled in the art, magnesium hydroxide, and also other commonly used compounds, or mixtures thereof.

Examples of suitable light stabilizers include various substituted resorcinols, salicylates, benzotriazoles and benzophenones.

Suitable matting agents include not only inorganic substances such as talc, glass beads or metal carbonates (for example $MgCO_3$, $CaCO_3$) but also polymer particles, in particular spherical particles having diameters $D_{50}$ greater than 1 $\mu$m, based on, for example, methyl methacrylate, styrene compounds, acrylonitrile or mixtures thereof. It is further also possible to use polymers comprising copolymerized acidic and/or basic monomers.

Examples of suitable antidrip agents include polytetrafluoroethylene (Teflon) polymers and ultrahigh molecular weight polystyrene (weight-average molecular weight Mw above 2,000,000 g/mol).

Examples of fibrous/pulverulent fillers include carbon or glass fibers in the form of glass fabrics, glass mats, or filament glass rovings, chopped glass, glass beads, and wollastonite, particular preference being given to glass fibers. When glass fibers are used they may be finished with a sizing and a coupling agent to improve compatibility with the blend components. The glass fibers incorporated may either take the form of short glass fibers or else continuous filaments (rovings).

Examples of suitable particulate fillers include carbon black, amorphous silica, magnesium carbonate, powdered quartz, mica, bentonites, talc, feldspar or, in particular, calcium silicates, such as wollastonite, and kaolin.

Examples of suitable stabilizers include hindered phenols but also vitamin E and compounds having analogous structures and also butylated condensation products of p-cresol and dicyclopentadiene. HALS stabilizers (Hindered Amine Light Stabilizers), benzophenones, resorcinols, salicylates, benzotriazoles are also suitable. Other suitable compounds include, for example, thiocarboxylic esters. Also usable are $C_6$-$C_{20}$) alkyl esters of thiopropionic acid, in particular the stearyl esters and lauryl esters. It is also possible to use the dilauryl ester of thiodipropionic acid (dilauryl thiodipropionate), the distearyl ester of thiodipropionic acid (distearyl thiodipropionate) or mixtures thereof. Examples of further additives include HALS absorbers, such as bis(2,2,6,6-tetramethyl-4-piperidyl) sebacate or UV absorbers such as 2H-benzotriazol-2-yl-(4-methylphenol).

Suitable lubricants and demolding agents include stearic acids, stearyl alcohol, stearic esters, polyolefin waxes and/or generally higher fatty acids, derivatives thereof and corresponding fatty acid mixtures comprising 1 to 45 carbon atoms. In a further preferred embodiment the composition comprises amide compounds having the formula $R^5$-CONH-$R^6$, wherein $R^5$ and $R^6$ are each independently selected from aliphatic, saturated or unsaturated hydrocarbon groups having 1 to 30 carbon atoms, preferably 12 to 24 carbon atoms, in particular 16 to 20 carbon atom. In a further preferred

embodiment of the invention, the composition may additionally comprise fatty acid ester compounds having the formula $R^7$-CO-O$R^8$, wherein $R^7$ and $R^8$ are each independently selected from aliphatic, saturated or unsaturated hydrocarbon groups having 1 to 45 carbon atoms, preferably 15 to 40 carbon atoms, in particular 25 to 35 carbon atoms. Also particularly suitable is ethylene-bis(stearamide).

In a further preferred embodiment, the thermoplastic polymer composition (P) may comprise an organic, inorganic or mixed phosphate, in particular an alkaline metal or earth alkaline metal phosphate such as $Ca_3(PO_4)_2$ and/or an organophosphate having alkyl or aryl groups comprising 1 to 12 carbon atoms. These phosphates may be conveniently added in form of a masterbatch, e.g. in combination with polyolefin waxes and/or olefin/styrene copolymers.

In a further preferred embodiment, thermoplastic polymer composition (P) may further comprise a polyester modified polysiloxane, in particular a polyester-polysiloxane-block copolymer, preferably a [polyester-b-polysiloxane-b-polyester] triblock copolymer. Preferred examples of the polysiloxane moieties comprised in the polyester-polysiloxane-blockcopolymer are derived from poly(dimethylsiloxane), poly(diethylsiloxane), poly(dipropylsiloxane), poly(dibutylsiloxane), and mixtures thereof.

Preparation of the thermoplastic polymer composition (P)

The invention also relates to a process for preparing a thermoplastic polymer composition (P) disclosed above, wherein the process comprises at least the following steps:

a) Providing the components (A) to (D) in the predetermined amounts to an optionally heatable mixing device; and
b) Blending the components (A) to (D) in the optionally heatable mixing device at temperatures above the glass transition point of the components (A) to (D) to obtain the thermoplastic polymer composition (P).

Optionally, a step in which a homogenous particulate material mixture is prepared from the components (A) to (D) may be carried out prior to step b). However, also when provided to the optionally heatable mixing device without previous mixing, a homogenous mixing is typically achieved in the optionally heatable mixing device.

Components (A) to (D) are typically provided in form of particulate materials having different particle sizes and particle size distributions. Typically, the components are provided in form of powders and / or granules.

The particulate materials (A) to (D) are provided to a mixing device in the required amounts and ratios as previously indicated and optionally mixed prior to the blending step b) in order to obtain a homogenous particulate material mixture. This may require 1 to 60, preferably 1 to 20, in particular 2 to 10 minutes, depending to the amount of particulate material to be mixed.

The thus obtained homogenous particulate material mixture is then transferred to an optionally heatable mixing apparatus and blended therein, producing a substantially liquid-melt polymer mixture.

"Substantially liquid-melt" means that the polymer mixture, as well as the predominant liquid-melt (softened) fraction, may further comprise a certain fraction of solid constituents, examples being unmelted fillers and reinforcing material such as glass fibers, metal flakes, or else unmelted pigments, colorants, etc. "Liquid-melt" means that the polymer mixture is at least of low fluidity, therefore having softened at least to an extent that it has plastic properties.

Mixing apparatuses used are those known to the skilled person. Components (A) and (B), and - where included - (C) and/or (D) may be mixed, for example, by joint extrusion, kneading, or rolling, the aforementioned components necessarily having been isolated from the aqueous dispersion or from the aqueous solution obtained in the polymerization.

Examples of mixing apparatus for implementing the method includes discontinuously operating, heated internal kneading devices with or without RAM, continuously operating kneaders, such as continuous internal kneaders, screw kneaders with axially oscillating screws, Banbury kneaders, furthermore extruders, and also roll mills, mixing roll mills with heated rollers, and calenders.

A preferred mixing apparatus used is an extruder or a kneader. Particularly suitable for melt extrusion are, for example, single-screw or twin-screw extruders.

A twin-screw extruder is preferred. In some cases the mechanical energy introduced by the mixing apparatus in the course of mixing is enough to cause the mixture to melt, meaning that the mixing apparatus does not have to be heated. Otherwise, the mixing apparatus is generally heated.

The temperature is guided by the chemical and physical properties of the styrene-based polymer composition (A) and the poly(siloxane) compound (B) and - when present - the colorant or colorant master batch (C) and/or the further additives (D), and should be selected such as to result in a substantially liquid-melt polymer mixture. On the other hand, the temperature is not to be unnecessarily high, in order to prevent thermal damage of the polymer mixture. The mechanical energy introduced may, however, also be high enough that the mixing apparatus may even require cooling. Mixing apparatus is operated customarily at 150 to 400, preferably 170 to 300°C.

In a preferred embodiment a heatable twin-screw extruder and a speed of 50 to 150 rpm, preferably 60 to 100 rpm is employed. Preferably, an extruding temperature of 170 to 270°C, preferably 210 to 250°C is employed to obtain

the thermoplastic polymer composition (P). The thermoplastic polymer composition (P) may be directly used, e.g. in moulding processes, preferably injection moulding processes, or may be processed to form granules which may be subjected to moulding processes afterwards. The moulding processes are preferably carried out at temperatures of 170 to 270°C, in particular 210 to 250°C to result in polymer moulded articles.

Processing may be carried out using the known processes for thermoplastic processing, in particular production may be effected by thermoforming, extruding, injection molding, calendaring, blow molding, compression molding, press sintering, deep drawing or sintering, preferably by injection molding.

The invention further relates to a molded article, prepared from a thermoplastic polymer composition (P) or a polymer composition, comprising a thermoplastic polymer composition (P) in combination with a further thermoplastic polymer as described above. The molded article may be prepared by any known processes for thermoplastic processing. In particular preparation may be effected by thermoforming, extruding, injection molding, calendaring, blow molding, compression molding, press sintering, deep drawing or sintering, preferably by injection molding.

The thermoplastic polymer composition (P) and the molded articles are advantageously used for the manufacture of components or articles for electronic devices, household goods and exterior and/or interior automotive parts, in particular for the manufacture of visible components or articles. A preferred application is the use in A/B/C pillars of automobiles.

The properties of the thermoplastic polymer composition (P) according to the present invention were determined. It was surprisingly found by the present inventors that the thermoplastic polymer composition (P) comprising 0.25 to 5 wt.-% of at least one organopolysiloxane compound combines improved residual gloss properties after abrasion in combination with an improved melt volume-flow rate (MVR). On the other hand, properties of the thermoplastic polymer composition (P) remain constant with respect to heat resistance and notched impact strength. This is in particular unexpected since an increase in melt volume-flow rate is typically accompanied by deterioration in notched impact strength. However, it was surprisingly found that this is not the case in the thermoplastic polymer composition (P) according to the present invention.

As regards the gloss, the surfaces of samples prepared from the thermoplastic polymer composition (P) according to the invention preferably exhibit a residual gloss of more than 12 %, preferably more than 15 %, more preferably more than 18 %, and in particular more than 25 % after abrasion was effected according to norm PV3975 compared to the surface of the non-abraded thermoplastic polymer composition (P).

As regards the gloss, the surfaces of samples prepared from the thermoplastic polymer composition (P) according to the invention preferably exhibit a relative gloss change of less than 45 %, preferably less than 35 % and most preferably less than 30 % after abrasion was effected according to norm PV3987 compared to the surface of the non-abraded thermoplastic polymer composition (P).

Concerning the melt characteristics of the thermoplastic polymer composition (P) according to the invention, a melt volume-flow rate (MVR, 220 ml/10 min according to ISO 1133), which is increased by a factor of at least 1.15, preferably by a factor of at least 1.2, in particular by a factor of $\geq 1.2$ and $\leq 3$, compared to the melt volume-flow rate of a thermoplastic polymer composition which does not comprise the at least one organopolysiloxane compound (B).

In a further embodiment, the heat resistance, determined as the Vicat softening temperature (VST B50, according to DIN EN ISO 306), of the thermoplastic polymer composition (P) is reduced by less than 5°C preferably less than 3°C, most preferably less than 1°C, compared to Vicat softening temperature of a thermoplastic polymer composition which does not comprise the at least one organopolysiloxane compound (B).

In a further embodiment of the invention, the Charpy notched impact strength (determined according to DIN EN ISO 179-1/1eA) of the thermoplastic polymer composition (P) according the present invention is reduced by less than 4 kJ/$m^2$, preferably less than 2 kJ/$m^2$, most preferably less than 1 kJ/$m^2$ when compared to the Charpy notched impact strength of a thermoplastic polymer composition which does not comprise the at least one organopolysiloxane compound (B).

The invention is further illustrated by the claims and examples.

Examples

Materials

Constituents A, C and D:

The styrene-based polymer constituent (A) was provided in form of a blend comprising the following polymer composition A*:

26.6 wt.-% AMSAN having an acrylonitrile content of 30 wt.-%;
37.3 wt.-% SAN having an acrylonitrile content of 35 wt.-%;
21.75 wt.-% ASA graft rubber having a mean particle diameter $D_{50}$ of about 90 nm; and
14.35 wt.-% ASA graft rubber having a mean particle diameter $D_{50}$ of about 550 nm.

The constituent (A) consisted to 88.85 wt.-% of the above described polymer composition A* and further comprised 9.70 wt.-% of a colorant constituent (C) in form of a colorant master batch comprising 20 wt.-% carbon black in a SAN copolymer matrix. Furthermore, 1.45 wt.-% of additive constituents (D) were present in constituent (A) in form of lubricants (polyethylene wax), plasticizers (DPHP IBC), light stabilizers (Tinuvin 770) and further stabilizers (Cyasorb 3853). Constituent (A) is commercial available from INEOS Styrolution Group GmbH, Germany).

Constituent B:

The polysiloxane constituent (B) was provided in form of a liquid component having a viscosity (25 °C) of 950 to 2000 mPas. It is commercially available from Evonik Nutrition & Care GmbH (Tegomer® Antiscratch L). The molecular weight (weight average, Mw) was determined with GPC (solvent: THF) to be 39311 g/mol (relative to a polystyrene standard).

Sample preparation

The sample according to Example 1 was prepared by compounding constituents A and B using a twin screw extruder (model ZSK26MC, Coperion GmbH, length: 1035 mm) at $T_m$=240°C according to the specific ratios given in Table 1 below. DIN A5 size samples have been prepared via injection molding ($T_m$: 242°C).

Comparative Example 1 was prepared by producing DIN A5 size samples of the constituent A prior to the addition of with constituent B via injection molding ($T_m$: 242°C).

Comparative Example 2 was prepared by producing DIN A5 size samples of poly(methyl methacrylate) (Plexiglas® 8N black, available from Evonik Performance Materials GmbH, Germany) via injection molding ($T_m$: 242°C).

The composition of the samples according to Example 1 to 3 and Comparative Example 1 are given in Table 1.

Table 1.

| Constituent | Ex. 1 (wt.-%) | Comp. Ex. 1 (wt.-%) | Comp. Ex. 2 (wt.-%) |
|---|---|---|---|
| Constituent A | 98.0 | 100 | --- |
| Constituent B | 2 | --- | --- |
| Plexiglas® 8N | --- | --- | 100 |

Testing Methods

The properties of the thermoplastic polymer compositions (P) were evaluated by the following testing methods. The same methods were applied to determine the properties of the constituents (A) to (D), where necessary.

Residual Gloss

Abrasion was effected according to PV3975. A Martindale abrasion tester was used with 281Q WOD abrasive paper (9mic, 215.9 mm*279 mm, 3M). All samples have been conditioned at 18-28 °C/50 % relative humidity for 7 days.

The number of cycles during testing was 10 with a load of 12 kPa. After abrasion, gloss was measured at 20° using a Multigloss 268 (Konica Minolta). Gloss retention (residual gloss) is calculated as follows:

$$residual\,gloss = \frac{gloss\ after\ testing}{initial\ gloss}$$

Relative Gloss Change

Abrasion was effected according to PV3987. An Erichsen Lineartester 249 was used with Rub Head Type C and 261X (5 $\mu$m) abrasive paper from 3M®. Prior to measurement, samples have been pre-conditioned at 18 to 27 °C

and 50 % r.h. for 7 days. Using a normal load of 9 N, 5 test cycles have been applied to the sample (linear scratch path). Gloss was measured using a Multigloss 268 (Konica Minolta). Relative gloss change is calculated as follows:

$$relative\ gloss\ change = \frac{inital\ gloss - gloss\ after\ testing}{initial\ gloss}$$

Melt volume-flow rate (MVR 220 °C / 10 kg) was measured according to ISO 1133.
Charpy notched impact strength was measured according to DIN EN ISO 179-1/1eA.
Heat resistance (VST B50) was measured according to DIN EN ISO 306.
The mean particle diameter $D_{50}$ may be determined by ultracentrifuge measurements (see W. Scholtan, H. Lange: Kolloid Z. & Z. Polymere 250, p. 782 to 796 (1972)).
The weight average molecular weight Mw was determined by gel permeation chromatography using UV-detection. Polystyrene was used as standard. Typically, tetrahydrofuran was used as solvent. The test results are summarized in Table 2.

Table 2.

| Example | Residual gloss [%] | Relative gloss change [%] | MVR 220/10 [ml/10 min] | Charpy notched impact strength [kJ/m$^2$] | Vicat softening point (VST B50) [°C] |
|---|---|---|---|---|---|
| Ex. 1 | 18.2 | 32.9 | 6.09 | 13.01 | 101 |
| Comp. Ex. 1 | 6.8 | 78.7 | 4.73 | 12.97 | 102 |
| Comp. Ex. 2 | 19 | 30.9 | - | - | - |

The experimental data summarized in Table 2 show that the thermoplastic polymer composition (P) according to the present invention comprising only small amounts of the at least one organopolysiloxane compound (B) as defined herein is characterized by having dramatically improved properties with respect to residual gloss (determined according to PV3975) compared to the respective styrene-based polymer composition without the addition of the organopolysiloxane compound (B) (cf. Ex. 1 and Comp. Ex. 1). In the absence of the organopolysiloxane compound (B), the styrene-based polymer composition shows only gloss retention of 6.8 % after testing according to PV3975 (cf. Comp. Ex. 1).
By contrast, the addition of only 2 wt.-% of organopolysiloxane results in a residual gloss after testing according to PV3975 of 18.2 %. This value is similar to the value achieved by PMMA materials, which are, however, more difficult to prepare and more expensive (cf. Comp. Ex. 2).
Furthermore, as can be seen from the experimental data in Table 2, Ex. 1 shows a low relative gloss change after testing according to PV3987, similar to the PMMA sample (Comp. Ex. 2) usually having high scratch resistance. On the contrary, without the addition of the organopolysiloxane compound (B), the styrene-based polymer composition shows very high relative gloss change of 78.7 % after testing (cf. Comp. Ex. 1).
Furthermore, it is demonstrated by Ex. 1, that the addition of the organopolysiloxane compound (B) is able to improve the melt flow characteristic (MVR) compared the base material (Comp. Ex. 1), while impact strength (Charpy notched impact strength) and heat resistance (Vicat Softening Point) are not adversely affected.
The thus obtained improved characteristics of the thermoplastic polymer composition (P) according to the present invention turn the copolymer composition to a convenient and inexpensive alternative to poly(methyl-methacrylate) compositions and/or UV-cured surfaces in applications such as housings of household goods and electronic devices as well as interior parts in the automotive industry.

## Claims

**1.** Thermoplastic polymer composition (P) comprising:

(A) up to 99.75 wt.-% of at least one styrene-based polymer composition (A) comprising at least one graft copolymer (A-1);
(B) 0.25 to 5 wt.-% of at least one organopolysiloxane compound;
(C) 0 to 10 wt.-% of at least one colorant, dye or pigment; and

(D) 0 to 3 wt.-% of at least one further additive;

wherein the constituents (A) to (D) sum up to 100 wt.-% of the thermoplastic polymer composition (P); and wherein

- the styrene-based polymer composition (A) comprises 20 to 60 wt.-%, preferably 30 to 40 wt.-%, of at least one styrene-based graft copolymer (A-1) and 40 to 80 wt.-%, preferably 60 to 70 wt.-%, of at least one thermoplastic polymer (A-2) selected from poly(styrene-acrylonitrile) (SAN), poly(a-methyl styrene-acrylonitrile) (AMSAN) and mixtures thereof;
- the at least one organopolysiloxane compound (B) has a weight average molecular weight Mw of 20,000 g/mol to 100,000 g/mol, determined by gel permeation chromatography (GPC) relative to polystyrene as standard and THF as solvent;
- wherein the at least one organopolysiloxane compound (B) is a block copolymer comprising blocks of polysiloxane moieties comprising repeating units having the following formula (Ia):

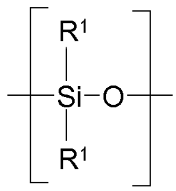

(Ia)

wherein each $R^1$ is independently selected from a linear or branched, saturated or unsaturated hydrocarbon group having 1 to 10, preferably 1 to 6, carbon atoms, and blocks of polyester and/or polyolefin moieties; and
- the at least one graft copolymer (A-1) is selected from a poly(acrylonitrile-butadiene-styrene) (ABS) having an average particle size $D_{50}$ of the rubber particles in the ABS copolymer from 50 to 750 nm, a poly(acrylonitrile-styrene-acrylic ester) (ASA) having an average particle size $D_{50}$ of the rubber particles in the ASA copolymer from 50 to 1000 nm, and mixtures thereof, wherein the average particle size is determined using an ultracentrifuge.

**2.** Thermoplastic polymer composition (P) according to claim 1 , wherein the at least one organopolysiloxane compound (B) is a block copolymer having a tri-block structure or a brush structure.

**3.** Thermoplastic polymer composition (P) according to claim 1 or 2, wherein the surface of the thermoplastic polymer composition (P) has a residual gloss of more than 25% after abrasion was effected according to norm PV3975 compared to the surface of the non-abraded thermoplastic polymer composition (P).

**4.** Thermoplastic polymer composition (P) according to any of claims 1 to 3, wherein the surface of the thermoplastic polymer composition (P) has a relative gloss change of less than 45% after abrasion was effected according to norm PV3987 compared to the surface of the non-abraded thermoplastic polymer composition (P).

**5.** Thermoplastic polymer composition (P) according to any of claims 1 to 4, wherein the melt volume-flow rate (MVR, 220 ml/10 min according to ISO 1133) of the thermoplastic polymer composition (P) is increased by a factor of at least 1.15 compared to the melt volume-flow rate of a thermoplastic polymer composition which does not comprise the at least one organopolysiloxane compound (B).

**6.** Thermoplastic polymer composition (P) according to any of claims 1 to 5, wherein the Vicat softening temperature (VST B50, according to DIN EN ISO 306) of the thermoplastic polymer composition (P) is reduced by less than 5°C compared to the Vicat softening temperature of a thermoplastic polymer composition which does not comprise the at least one organopolysiloxane compound (B).

**7.** Thermoplastic polymer composition (P) according to any of claims 1 to 6, wherein and Charpy notched impact strength of the thermoplastic polymer composition (P) is reduced by less than 4 $kJ/m^2$, compared to the Charpy notched impact strength of a thermoplastic polymer composition which does not comprise the at least one organopolysiloxane compound (B).

**8.** Process for preparing a thermoplastic polymer composition (P) according to any of claims 1 to 7, wherein the process comprises at least the following steps:

a) Providing the components (A) to (D) in the predetermined amounts to an optionally heatable mixing device; and
b) Blending the components (A) to (D) in the optionally heatable mixing device at temperatures above the glass transition point of the components (A) to (D) to obtain the thermoplastic polymer composition (P).

**9.** Molded article, prepared from a thermoplastic polymer composition (P) according to any of claims 1 to 7.

**10.** Use of a thermoplastic polymer composition (P) according to any of claims 1 to 7 or a molded article according to claim 9 for the manufacture of components or articles for electronic devices, household goods and automotive parts.

**Patentansprüche**

**1.** Thermoplastische Polymerzusammensetzung (P), umfassend:

(A) bis zu 99,75 Gew.-% mindestens einer auf Styrol basierenden Polymerzusammensetzung (A), umfassend mindestens ein Pfropfcopolymer (A-1) ;
(B) 0,25 bis 5 Gew.-% mindestens einer Organopolysiloxanverbindung;
(C) 0 bis 10 Gew.-% mindestens eines Farbmittels, Farbstoffs oder Pigments und
(D) 0 bis 3 Gew.-% mindestens eines weiteren Additivs;

wobei sich die Bestandteile (A) bis (D) zu 100 Gew.-% der thermoplastischen Polymerzusammensetzung (P) summieren; und wobei

• die auf Styrol basierende Polymerzusammensetzung (A) 20 bis 60 Gew.-%, vorzugsweise 30 bis 40 Gew.-%, mindestens eines auf Styrol basierenden Pfropfcopolymers (A-1) und 40 bis 80 Gew.-%, vorzugsweise 60 bis 70 Gew.-%, mindestens eines thermoplastischen Polymers (A-2), das aus Poly(styrol-acrylnitril) (SAN), Poly($\alpha$-methylstyrol-acrylnitril) (AMSAN) und Mischungen davon ausgewählt ist, umfasst;
• die mindestens eine Organopolysiloxanverbindung (B) ein durch Gelpermeationschromatographie (GPC) relativ zu Polystyrol als Standard und THF als Lösungsmittel bestimmtes gewichtsmittleres Molekulargewicht Mw von 20.000 g/mol bis 100.000 g/mol aufweist;
• wobei es sich bei der mindestens einen Organopolysiloxanverbindung (B) um ein Blockcopolymer handelt, das Blöcke von Polysiloxangruppierungen, die Wiederholungseinheiten mit der folgenden Formel (Ia) umfassen:

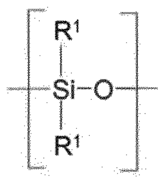

(Ia)

wobei $R^1$ jeweils unabhängig aus einer linearen oder verzweigten, gesättigten oder ungesättigten Kohlenwasserstoffgruppe mit 1 bis 10 und vorzugsweise 1 bis 6 Kohlenstoffatomen ausgewählt ist, und Blöcke von Polyester- und/oder Polyolefingruppierungen umfasst; und
• das mindestens eine Pfropfcopolymer (A-1) aus einem Poly(acrylnitril-butadien-styrol) (ABS) mit einer durchschnittlichen Teilchengröße $D_{50}$ der Kautschukteilchen in dem ABS-Copolymer von 50 bis 750 nm, einem Poly(acrylnitril-styrol-acrylsäureester) (ASA) mit einer durchschnittlichen Teilchengröße $D_{50}$ der Kautschukteilchen in dem ASA-Copolymer von 50 bis 1000 nm und Mischungen davon ausgewählt ist, wobei die durchschnittliche Teilchengröße unter Verwendung einer Ultrazentrifuge bestimmt wird.

**2.** Thermoplastische Polymerzusammensetzung (P) nach Anspruch 1, wobei es sich bei der mindestens einen Organopolysiloxanverbindung (B) um ein Blockcopolymer mit einer Triblockstruktur oder einer Bürstenstruktur handelt.

**3.** Thermoplastische Polymerzusammensetzung (P) nach Anspruch 1 oder 2, wobei die Oberfläche der thermoplastischen Polymerzusammensetzung (P) nach Abrieb gemäß der Norm PV 3987 im Vergleich zur Oberfläche der thermoplastischen Polymerzusammensetzung (P) ohne Abrieb einen Restglanz von mehr als 25 % aufweist.

**4.** Thermoplastische Polymerzusammensetzung (P) nach einem der Ansprüche 1 bis 3, wobei die Oberfläche der thermoplastischen Polymerzusammensetzung (P) nach Abrieb gemäß der Norm PV 3987 im Vergleich zur Oberfläche der thermoplastischen Polymerzusammensetzung (P) ohne Abrieb eine relative Glanzänderung von weniger als 45 % aufweist.

5. Thermoplastische Polymerzusammensetzung (P) nach einem der Ansprüche 1 bis 4, wobei die Schmelze-Volumenfließrate (MVR, 220 ml/10 min gemäß ISO 1133) der thermoplastischen Polymerzusammensetzung (P) im Vergleich zur Schmelze-Volumenfließrate einer thermoplastischen Polymerzusammensetzung, die die mindestens eine Organopolysiloxanverbindung (B) nicht umfasst, um einen Faktor von mindestens 1,15 erhöht ist.

6. Thermoplastische Polymerzusammensetzung (P) nach einem der Ansprüche 1 bis 5, wobei die Vicat-Erweichungstemperatur (VST B50 gemäß DIN EN ISO 306) der thermoplastischen Polymerzusammensetzung (P) im Vergleich zur Vicat-Erweichungstemperatur einer thermoplastischen Polymerzusammensetzung, die die mindestens eine Organopolysiloxanverbindung (B) nicht umfasst, um mindestens 5 °C verringert ist.

7. Thermoplastische Polymerzusammensetzung (P) nach einem der Ansprüche 1 bis 6, wobei die Charpy-Kerbschlagzähigkeit der thermoplastischen Polymerzusammensetzung (P) im Vergleich zur Charpy-Kerbschlagzähigkeit einer thermoplastischen Polymerzusammensetzung, die die mindestens eine Organopolysiloxanverbindung (B) nicht umfasst, um mindestens 4 $kJ/m^2$ verringert ist.

8. Verfahren zur Herstellung einer thermoplastischen Polymerzusammensetzung (P) nach einem der Ansprüche 1 bis 7, wobei das Verfahren mindestens die folgenden Schritte umfasst:

   a) Bereitstellen der Komponenten (A) bis (D) in den vorbestimmten Mengen in einer gegebenenfalls beheizbaren Mischvorrichtung; und
   b) Vermischen der Komponenten (A) bis (D) in der gegebenenfalls beheizbaren Mischvorrichtung bei Temperaturen oberhalb des Glasübergangspunkts der Komponenten (A) bis (D) zum Erhalt der thermoplastischen Polymerzusammensetzung (P).

9. Formkörper, hergestellt aus einer thermoplastischen Polymerzusammensetzung (P) nach einem der Ansprüche 1 bis 7.

10. Verwendung einer thermoplastischen Polymerzusammensetzung (P) nach einem der Ansprüche 1 bis 7 oder eines Formkörpers nach Anspruch 9 zur Herstellung von Bauteilen oder Artikeln für elektronische Geräte, Haushaltswaren und Automobilteile.

**Revendications**

1. Composition (P) de polymère thermoplastique comprenant :

   (A) jusqu'à 99,75 % en poids d'au moins une composition (A) de polymère à base de styrène comprenant au moins un copolymère greffé (A-1) ;
   (B) 0,25 à 5 % en poids d'au moins un composé de type organopolysiloxane ;
   (C) 0 à 10 % en poids d'au moins un(e) matière colorante, colorant ou pigment ; et
   (D) 0 à 3 % en poids d'au moins un additif supplémentaire ;

   les constituants (A) à (D) totalisant 100 % en poids de la composition (P) de polymère thermoplastique ; et

   • la composition (A) de polymère à base de styrène comprenant 20 à 60 % en poids, préférablement 30 à 40 % en poids, d'au moins un copolymère greffé (A-1) à base de styrène et 40 à 80 % en poids, préférablement 60 à 70 % en poids, d'au moins un polymère (A-2) thermoplastique choisi parmi un poly(styrène-acrylonitrile) (SAN), un poly($\alpha$-méthylstyrène-acrylonitrile) (AMSAN) et des mélanges correspondants ;
   • l'au moins un composé de type organopolysiloxane (B) possédant un poids moléculaire moyen en poids Mw de 20 000 g/mole à 100 000 g/mole, déterminé par chromatographie à perméation de gel (CPG) par rapport à un polystyrène en tant que référence et du THF en tant que solvant ;
   • l'au moins un composé de type organopolysiloxane (B) étant un copolymère à blocs comprenant des blocs de groupements polysiloxane comprenant des motifs répétitifs possédant la formule suivante (Ia) :

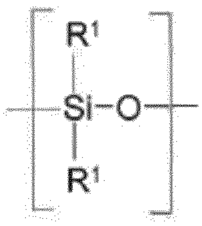

(Ia)

chaque $R^1$ étant indépendamment choisi parmi un groupe hydrocarboné linéaire ou ramifié, saturé ou insaturé possédant 1 à 10, préférablement 1 à 6, atomes de carbone, et des blocs de groupements polyester et/ou polyoléfine ; et

• l'au moins un copolymère greffé (A-1) étant choisi parmi un poly(acrylonitrile-butadiène-styrène) (ABS) possédant une taille moyenne de particule $D_{50}$ des particules de caoutchouc dans le copolymère ABS de 50 à 750 nm, un poly(acrylonitrile-styrène-ester acrylique) (ASA) possédant une taille moyenne de particule $D_{50}$ des particules de caoutchouc dans le copolymère ASA de 50 à 1 000 nm, et des mélanges correspondants, la taille moyenne de particule étant déterminée en utilisant une ultracentrifugeuse.

**2.** Composition (P) de polymère thermoplastique selon la revendication 1, l'au moins un composé de type organopolysiloxane (B) étant un copolymère à blocs possédant une structure de tribloc ou une structure en brosse.

**3.** Composition (P) de polymère thermoplastique selon la revendication 1 ou 2, la surface de la composition (P) de polymère thermoplastique possédant une brillance résiduelle de plus de 25 % après qu'une abrasion a été effectuée selon la norme PV3975 par comparaison avec la surface de la composition (P) de polymère thermoplastique non abrasée.

**4.** Composition (P) de polymère thermoplastique selon l'une quelconque des revendications 1 à 3, la surface de la composition (P) de polymère thermoplastique possédant un changement de brillance relative de moins de 45 % après qu'une abrasion a été effectuée selon la norme PV3987 par comparaison avec la surface de la composition (P) de polymère thermoplastique non abrasée.

**5.** Composition (P) de polymère thermoplastique selon l'une quelconque des revendications 1 à 4, le débit volumique à l'état fondu (MVR, 220 ml/10 min selon la norme ISO 1133) de la composition (P) de polymère thermoplastique étant augmenté d'un facteur d'au moins 1,15 par rapport au débit volumique à l'état fondu d'une composition de polymère thermoplastique qui ne comprend pas l'au moins un composé de type organopolysiloxane (B).

**6.** Composition (P) de polymère thermoplastique selon l'une quelconque des revendications 1 à 5, la température de ramollissement Vicat (VST B50, selon la norme DIN EN ISO 306) de la composition (P) de polymère thermoplastique étant réduite de moins de 5 °C par comparaison avec la température de ramollissement Vicat d'une composition de polymère thermoplastique qui ne comprend pas l'au moins un composé de type organopolysiloxane (B).

**7.** Composition (P) de polymère thermoplastique selon l'une quelconque des revendications 1 à 6, une résilience Charpy sur éprouvette entaillée de la composition (P) de polymère thermoplastique étant réduite de moins de 4 $kJ/m^2$, par comparaison avec la résilience Charpy sur éprouvette entaillée d'une composition de polymère thermoplastique qui ne comprend pas l'au moins un composé de type organopolysiloxane (B).

**8.** Procédé pour la préparation d'une composition (P) de polymère thermoplastique selon l'une quelconque des revendications 1 à 7, le procédé comprenant au moins les étapes suivantes :

a) la fourniture des composants (A) à (D) dans les quantités prédéterminées à un dispositif de mélange pouvant éventuellement être chauffé ; et

b) le mélange des composants (A) à (D) dans le dispositif de mélange pouvant éventuellement être chauffé à des températures supérieures au point de transition vitreuse des composants (A) à (D) pour obtenir la composition (P) de polymère thermoplastique.

**9.** Article moulé, préparé à partir d'une composition (P) de polymère thermoplastique selon l'une quelconque des revendications 1 à 7.

**10.** Utilisation d'une composition (P) de polymère thermoplastique selon l'une quelconque des revendications 1 à 7 ou d'un article moulé selon la revendication 9 pour la fabrication de composants ou d'articles pour des dispositifs électroniques, des appareils ménagers et des pièces automobiles.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 201679324 A
- WO 2015132190 A
- WO 2010072812 A
- JP 06025507 A
- JP 62039610 A
- JP 57187345 A
- JP 57187346 A
- JP 6118433 A
- US 20080242779 A1
- US 5380795 A
- DE 2826925 A
- DE 3149358 A
- DE 3414118 A
- WO 2015150223 A
- WO 2015078751 A
- US 4009226 A
- US 4181788 A

### Non-patent literature cited in the description

- **W. SCHOLTAN ; H. LANGE.** *Kolloid-Z. u. Z. Polymere,* 1972, vol. 250, 782-796
- **W. WOHLLEBEN ; H. SCHUCH.** Measurement of Particle Size Distribution of Polymer Latexes. 2010, 130-153
- **LANGE.** *Kolloid-Zeitschrift und Zeitschrift für Polymere,* vol. 223
- Plastics Additives Handbook. Hanser Publ, 2009
- **W. SCHOLTAN ; H. LANGE.** *Kolloid Z. & Z. Polymere,* 1972, vol. 250, 782-796